# EUROPEAN PATENT SPECIFICATION

(11) **EP 3 168 903 B1**
(45) Date of publication and mention of the grant of the patent: **22.05.2019**
(21) Application number: 15819102.3
(22) Date of filing: 03.07.2015
(51) Int. Cl.: H01M 2/20, H01M 2/24, H01M 2/28

(54) **WELDING MASK APPARATUS**
SCHWEISSMASKENVORRICHTUNG
DISPOSITIF DE MASQUE DE SOUDAGE

(30) Priority: 09.07.2014 JP 2014141605
(43) Date of publication of application: 17.05.2017
(73) Proprietor: Hitachi Chemical Company, Ltd., Chiyoda-ku Tokyo 100-6606 (JP)
(72) Inventor: KOMETANI, Syunsuke, Tokyo 100-6606 (JP); TUJII, Nobunaga, Tokyo 100-6606 (JP); SUZUKI, Masataka, Tokyo 100-6606 (JP); KITAMORI, Shigetaka, Tokyo 100-6606 (JP); HATAKENAKA, Toshikazu, Tokyo 100-6606 (JP)
(74) Representative: Mewburn Ellis LLP
(86) International application number: PCT/JP2015/069302
(87) International publication number: WO 2016/006555

(56) References cited:
- WO-A2-2014/023719
- JP-A- S5 021 929
- JP-A- H02 223 149
- JP-A- S60 138 849
- JP-A- 2002 170 545
- US-A- 3 695 939
- US-A- 4 050 501
- US-A1- 2011 132 967

## Description

### TECHNICAL FIELD

The present invention relates to a welding mask apparatus used to connect, by welding, respective electrode columns of electrode groups of a secondary battery used in an uninterruptible power supply system or the like.

### BACKGROUND ART

Secondary batteries such as lead-acid batteries are used for various purposes as batteries for automobiles and in electric vehicles such as forklifts, uninterruptible power supply systems, and so forth.

JP 07-24214 B (Patent Document 1) discloses a method of welding inter-cell connection members for a lead-acid battery including a pair of electrodes, a pressing device, and a current supply device. The pair of electrodes are operable to press positive and negative connection conductors, which are arranged oppositely on the left and right sides of a through hole formed in a partition wall portion between cells of a battery case, from the outer side toward the through hole. The pressing device is operable to press the pair of electrodes to narrow the interval therebetween. The current supply device is operable to supply an electric current to the electrodes.

US2011/132967 discloses an ignition source system for an exothermic reaction mold device for welding conductors. The system includes a crucible in a block with an open top so that the crucible receives an exothermic weld material. The conductors to be welded exothermically are placed in the weld cavity of the mold. A lid covers the open top wherein the lid has an opening therethrough. An electronic thermal igniter assembly has an ignition component receivable through the opening in the lid so that the exothermic weld material may be ignited by the electronic thermal igniter assembly. The igniter plug rests on top of the lid and the ignition body is retained in a recess within the igniter plug.

### BACKGROUND ART DOCUMENT

### PATENT DOCUMENT

Patent Document 1: JP 07-24214 B

### SUMMARY OF INVENTION

### TECHNICAL PROBLEM

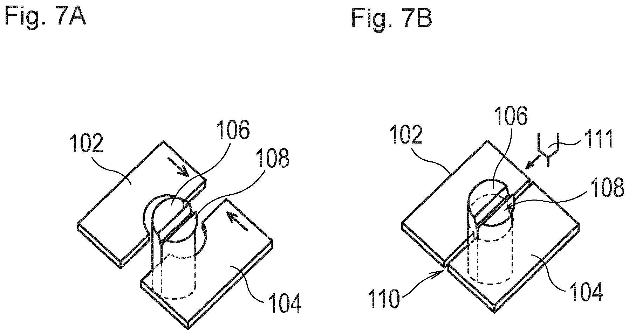

It has been recent practice to not only connect electrode groups via a through hole formed in a partition wall portion between cells, but also weld respective electrode columns provided for the electrode groups on the outer side of a free end portion of the partition wall portion without using a connection portion that passes through the through hole. Figs. 7A and 7B illustrate a conventional welding mask apparatus used to weld the electrode columns. In the conventional welding mask apparatus, only two operations are performed; that is, to move two mask plates 102 and 104 toward two electrode columns 106 and 108 assembled with each other, and to move the two mask plates 102 and 104 away from the two electrode columns 106 and 108. If the two electrode columns 106 and 108 are assembled, being shifted in a transverse direction (a direction orthogonal to the direction of movement of the mask plates 102 and 104 and parallel to the upper and lower surfaces of the mask plates 102 and 104), the peripheries of the two electrode columns 106 and 108 cannot be completely surrounded by the mask plates when the two mask plates abut on each other (the mask comprised of the two mask plates is closed), and a gap 110 may be formed between the two mask plates and the electrode columns. If the gap 110 is formed, metal at the distal end portions of the electrode columns 106 and 108 is melted by a welding torch 111 and the molten metal flows down through the gap 110. When such a problem is caused, it is necessary to stop the manufacturing line to deal with the problem.

In order to address the foregoing problem, an object of the present invention is to provide a welding mask apparatus that suppresses formation of a gap between two electrode columns and mask plates even if the electrode columns are not completely assembled.

### SOLUTION TO PROBLEM

According to an aspect of the present invention there is provided a welding mask apparatus according to claim 1.

According to the present invention, even if the two electrode columns are assembled, being shifted in the X direction, the two mask plates are displaced in the X direction so that the two electrode columns can be completely fitted in the respective recessed portions formed in the two mask plates . A gap into which molten metal would flow down is not formed between the outer peripheral portions of the two electrode columns, which have been assembled with each other, and the two mask plates when the two mask plates abut on each other.

The recessed portion formed in each of the two mask plates opens in the **Z** direction, a direction opposite to the **Z** direction, and a direction toward the abutting position, and a pair of corner portions of an inner surface of the recessed portion, which are respectively continuous with the pair of straight portions, are curved or inclined to approach each other toward the open position. The outer surfaces of the electrode columns, which are to be fitted into such recessed portions, are shaped to be analogous to the recessed portions. As a result, portions of the electrode columns to be first fitted into the recessed portions have a cross-sectional shape having a curved or inclined portion that is analogous to the corner portion of the inner surface of the recessed portions. Consequently, the two mask plates are smoothly displaced in the X direction along the curved or inclined portion.

Preferably, the displacement allowing mechanism is configured to hold the mask plates at an origin position when the mask plates are positioned at the open position; to allow intersections between the recessed portion and the straight portions of each mask plate to be displaced in the X direction along an outer surface of the corresponding electrode column when the mask plates are moved from the open position to the abutting position so that the recessed portion of each mask plate is fitted with the corresponding electrode column; and to allow the mask plates to be displaced in the X direction and return the mask plates to the origin position when the mask plates are moved from the abutting position to the open position. With the displacement allowing mechanism configured in this way, the two mask plates can be automatically displaced from the origin position to an adequate fitted position, and automatically returned to the origin position after the welding. Preferably, the displacement allowing mechanism enables the mask plates to be displaced in the X direction by utilizing an energy storing function and an energy releasing function of a spring or an elastic member. Using a spring or an elastic member advantageously simplifies the structure of the displacement allowing mechanism.

The welding mask apparatus according to the present invention may be defined more specifically as follows. The two electrode columns of the two electrode groups each have an opposing surface. The opposing surfaces of the two electrode columns directly oppose each other on the outer side of an end of the partition wall portion with the two electrode columns being combined with each other before being welded. Two opposing surfaces of the two electrode columns are shaped to form a welding groove opened wider in the Z direction. The welding mask apparatus is configured to prevent molten metal from falling down toward the electrode groups when the welding groove is welded by TIG welding process, by surrounding an outer periphery of a welded structure portion that is formed by combining the two electrode columns with the two opposing surfaces opposing each other.

The two mask plates each have a recessed portion and a pair of straight portions. The recessed portion is formed at an abutting end portion thereof to define a part of the through hole at the time of abutting. The pair of straight portions are respectively located at both ends of the recessed portion in the X direction, and extend in the X direction. One of the two electrode columns is fitted in the recessed portion of one of the two mask plates and one of the pair of straight portions of the one mask plate is in contact with the opposing surface of the other of the two electrode columns when the two electrode columns are combined with each other, being shifted in the X direction. The mask holding mechanism includes a moving mechanism and a displacement allowing mechanism. The moving mechanism is operable to move the two mask plates in the Y direction between an abutting position and an open position. The displacement allowing mechanism is operable to hold the two mask plates such that the two mask plates are displaceable in the X direction when the two mask plates are positioned in the abutting position.

### EFFECT OF INVENTION

Since the present invention comprises the mask holding mechanism which holds the two mask plates, a moving mechanism which is operable to move the two mask plates in the Y direction between an abutting position and an open position and a displacement allowing mechanism which is operable to hold the two mask plates such that the two mask plates are displaceable in the X direction when the two mask plates are positioned in the abutting position, even if the two electrode columns are assembled, being shifted in the X direction, the two mask plates are displaced in the X direction so that the two electrode columns can be completely fitted in the respective recessed portions formed in the two mask plates. A gap into which molten metal would flow down is not formed between the outer peripheral portions of the two electrode columns, which have been assembled with each other, and the two mask plates when the two mask plates abut on each other.

### BRIEF DESCRIPTION OF DRAWINGS

Fig. 1 is a plan view illustrating a welding mask apparatus according to an embodiment of the present invention, showing that two mask plates are positioned in an abutting position.
Fig. 2 is a view similar to Fig. 1, showing that the two mask plates are positioned in an open position.
Fig. 3 is a view similar to Fig. 1, showing that the two mask plates are moving toward the abutting position from the position illustrated in Fig. 2.
Fig. 4A is a sectional view taken along line IV-IV of Fig. 6 and illustrating only a welded structure portion to be masked in the embodiment illustrated in Fig. 1. Fig. 4B is a plan view illustrating that the two mask plates are positioned in the abutting position with the welded structure portion interposed therebetween. Fig. 4C is a view illustrating that the two mask plates are positioned in the abutting position with the welded structure portion interposed therebetween as seen from a side.
Fig. 5 is a perspective view illustrating an example secondary battery including electrode columns of Fig. 4A, illustrating the secondary battery before the welded structure portion is welded.
Fig. 6 is a front view illustrating the secondary battery of Fig. 5 with a side plate on the front side of a battery case body cut away.
Figs. 7A and 7B are perspective views used to illustrate a welding mask apparatus according to the related art.

### DESCRIPTION OF EMBODIMENTS

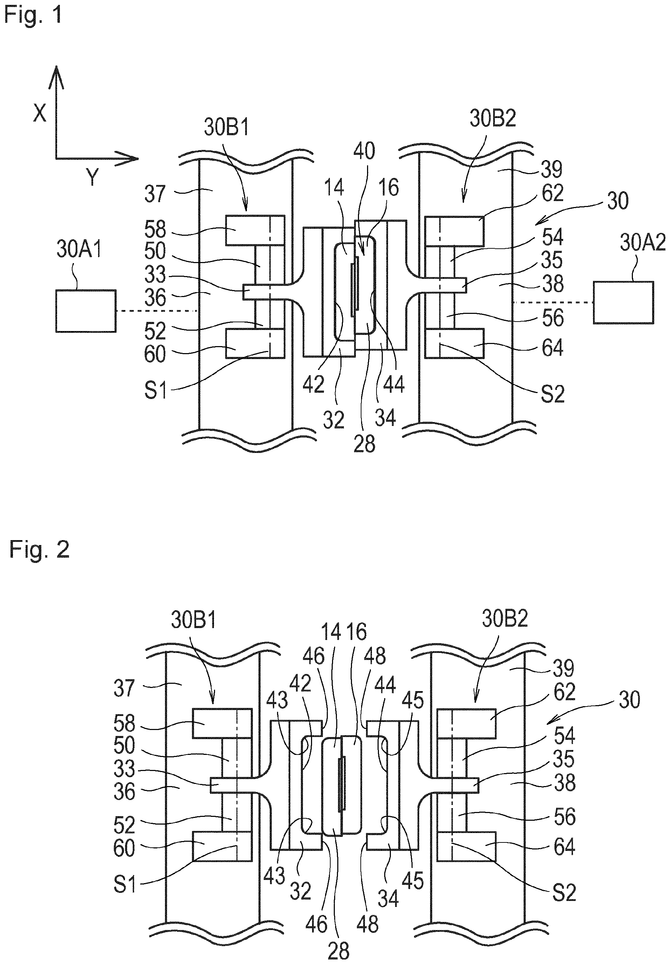

A welding mask apparatus according to an embodiment of the present invention will be described below with reference to the accompanying drawings. Figs. 1 to 3 illustrate steps of welding performed using a welding mask apparatus 30 according to the embodiment of the present invention. The welding mask apparatus 30 is used to weld respective electrode columns of two adjacent electrode groups housed respectively in battery case cells of a secondary battery such as a lead-acid battery illustrated in Figs . 5 and 6, thereby connecting the electrode columns.

The secondary battery (lead-acid battery) to which the welding mask apparatus according to the embodiment is applied includes a battery case body 2 in the shape of a rectangular parallelepiped opening upward. The inside of the battery case body 2 is partitioned by a partition wall 4 into six battery case cells 6. Electrode groups 8 are housed respectively in the battery case cells 6. The electrode groups 8 are each constituted by alternately stacking negative plates 10 and positive plates (not illustrated) via separators 12. The electrode groups 8 each have an electrode column 14 and an electrode column 16 for connection with other electrode groups 8 adjacent thereto. The electrode column 14 is welded to a negative current collecting member (strap) to which lug portions of the plurality of negative electrodes are connected. The electrode column 16 is welded to a positive current collecting member (strap) to which lug portions of the plurality of positive electrodes are connected.

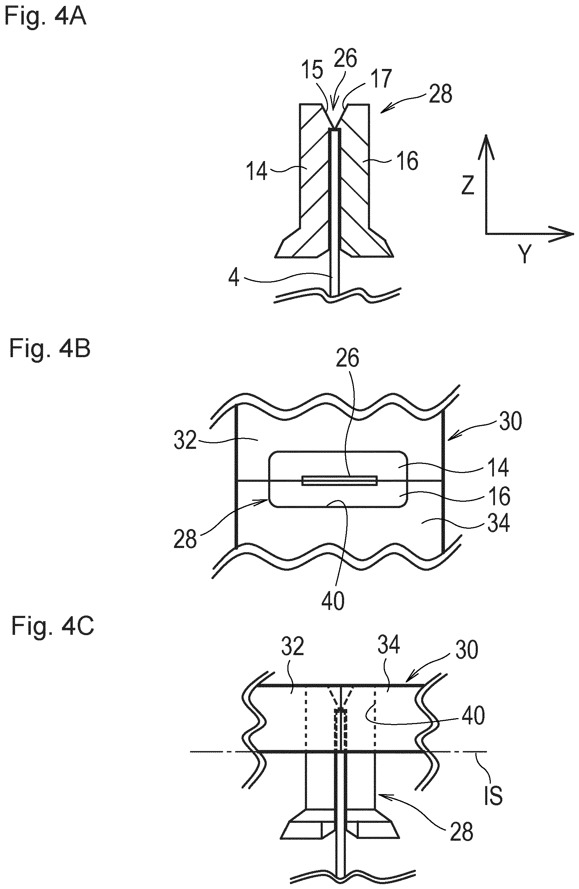

Fig. 4A is a sectional view illustrating the electrode columns 14 and 16 of two adjacent electrode groups 8 in a state before the electrode columns 14 and 16 are welded on the outer side of a free end portion of the partition wall 4 to form a connection portion 18. In order to form the connection portion 18, a welding groove 26 having a V-shaped section is provided at the respective upper end portions of the electrode columns 14 and 16. Two opposing surfaces 15 and 17 of the two electrode columns 14 and 16 are shaped such that the gap formed between the opposing surfaces 15 and 17 forms the welding groove 26 in a V-shape opened wider in the Z direction. The electrode columns 14 and 16 are made of a lead alloy.

In the welding mask apparatus, in the course of manufacturing such a secondary battery, when welding the two respective electrode columns 14 and 16 of the two electrode groups 8 housed respectively in the two battery case cells 6 partitioned by the partition wall portion 4 to connect the two electrode columns 14 and 16 on the outer side of the free end portion of the partition wall portion 4, thereby forming the connection portion 18, the two electrode columns 14 and 16 are combined to form a welded structure portion 28. The welding groove 26 of the welded structure portion 28 is filled with molten lead supplied by TIG welding process or the like to form the connection portion 18. In this welding process, the welding mask apparatus 30 is attached to the welded structure portion 28 as illustrated in Figs. 4B and 4C.

Herein, the Z direction, which is indicated by the arrow Z in Fig. 4A, is defined as a direction from the free end portion of the partition wall 4 toward the connection portion 18. The X direction, which is indicated by the arrow X in Fig. 1 as discussed later, is defined as a direction orthogonal to the Z direction in (or along) which the free end portion of the partition wall 4 extends. The Y direction, which is indicated by the arrow Y in Figs. 1 and 4, is defined as a direction orthogonal to the Z and X directions.

The welding mask apparatus 30 according to the embodiment illustrated in Figs. 1 to 4 includes two mask plates 32 and 34 and mask holding mechanisms 36 and 38 operable to hold the two mask plates 32 and 34, respectively. The two mask plates 32 and 34 are disposed along an imaginary surface IS [Fig. 4C] extending in the X direction and the Y direction, and shaped to form a through hole 40 to allow the welded structure portion 28 to get thereinto when the two mask plates 32 and 34 abut on each other. As illustrated in Fig. 2, the two mask plates 32, 34 respectively have recessed portions 42, 44 and pairs of straight portions 46 and 46, 48 and 48. The recessed portions 42, 44 are formed at respective abutting end portions of the two mask plates 32, 34 to define a part of the through hole 40 when the two mask plates 32, 34 abut on each other. The pairs of straight portions 46 and 46, 48 and 48 are respectively located at both ends of the recessed portions 42, 44 in the X direction, and extend in the X direction.

The mask holding mechanisms 36, 38 respectively include moving mechanisms 30A1, 30A2 and displacement allowing mechanisms 30B1, 30B2. The moving mechanisms 30A1, 30A2 are operable to respectively move the mask plates 32, 34 in the Y direction between respective abutting positions (positions indicated in Fig. 1) and respective open positions (positions indicated in Fig. 2). The displacement allowing mechanisms 30B1, 30B2 are operable to respectively hold the mask plates 32, 34 such that the mask plates 32, 34 are displaceable in the X direction when the mask plates 32, 34 are positioned in their respective abutting positions . The moving mechanisms 30A1, 30A2 are coupled respectively to bases 37, 39 of the mask holding mechanisms 36, 38 to reciprocally move the entire mask holding mechanisms 36, 38 in the Y direction. Specifically, the moving mechanisms 30A1, 30A2 may be each constituted of a reciprocal linear motion mechanism that uses a servomotor or a hydraulic cylinder as a drive source. The displacement allowing mechanisms 30B1, 30B2 respectively have pairs of elastic members
50 and 52, 54 and 56 that are expandable and contractible in at least the X direction. The pairs of elastic members 50 and 52, 54 and 56 are disposed side by side in the X direction to respectively interpose held portions 33, 35 of the mask plates 32, 34 to be respectively held by the mask holding mechanisms 36, 38. The displacement allowing mechanisms 30B1, 30B2 respectively include pairs of rigid bodies 58 and 60, 62 and 64. The pairs of rigid bodies 58 and 60, 62 and 64 are respectively fixed on the bases 37, 39, and disposed with an interval on both sides, in the X direction, of the held portions 33, 35 of the mask plates 32, 34. The pair of elastic members 50 and 52 are located in a compressed state between the held portion 33 and the pair of rigid bodies 58 and 60. The pair of elastic members 54 and 56 are located in a compressed state between the held portion 35 and the pair of rigid bodies 62 and 64. The material, the dimensions, and the compression rate of the pair of elastic members 50 and 52 and the pair of elastic members 54 and 56 are determined such that the held portion 33 is located at the center between the pair of rigid bodies 58 and 60 and the held portion 35 is located at the center between the pair of rigid bodies 62 and 64 when the pair of mask plates 32 and 34 are positioned in the respective open positions. Shafts S1 and S2 are disposed at positions indicated by the dashed lines in Figs. 1 and 2. Both ends of the shafts S1 and S2 are fixed respectively to the pairs of rigid bodies 58 and 60, 62 and 64. A through hole, which the shafts S1, S2 pass through, is formed each in the held portions 33, 35 of the mask plates 32, 34 and the pairs of elastic members 50 and 52, 54 and 56. This configuration allows displacement of the held portions 33, 35 of the mask plates 32, 34, that is, displacement of the mask plates 32, 34 in the X direction. The combination of such displacement allowing mechanisms 30B1, 30B2, the shape of the mask plates 32, 34, and the shape of the outer surfaces of the electrode columns 14, 16 allows the mask plates 32, 34 to be smoothly displaced within a regulated range in the X direction.

The recessed portion 42 formed in the mask plate 32 opens in the Y direction. The recessed portion 44 formed in the mask plate 34 opens in the direction opposite to the Y direction. Hence, the recessed portion 42 and the recessed portion 44 open toward each other in the direction toward the position (the abutting position) where the mask plates 32, 34 abut on each other. In the embodiment, as illustrated in Fig. 2, pairs of corner portions 43 and 43, 45 and 45 of respective inner surfaces of the recessed portions 42, 44, which are respectively continuous with the pairs of straight portions 46, 48 of the mask plates 32, 34, are curved or inclined to approach each other toward the respective open positions.

The outer surfaces of the electrode columns 14, 16, which are to be fitted in the recessed portions 42, 44 shaped as described above, are formed to be analogous in shape to the recessed portions 42, 44. That is, the recessed portions 42, 44 and the outer surfaces of the electrode columns 14, 16 are complementary in shape to each other as viewed in plan. Thus, the cross-sectional shapes of respective portions of the electrode columns 14, 16, which first get into the recessed portions 42, 44 when the mask plates 32, 34 are moved from the respective open positions (Fig. 2) toward the respective abutting positions, each have a curved or inclined portion that is analogous in shape to the corner portions 43 and 43, 45 and 45 of the inner surfaces of the recessed portions 42, 44. As a result, the mask plates 32, 34 are smoothly displaced in the X direction while being guided along the curved or inclined portions.

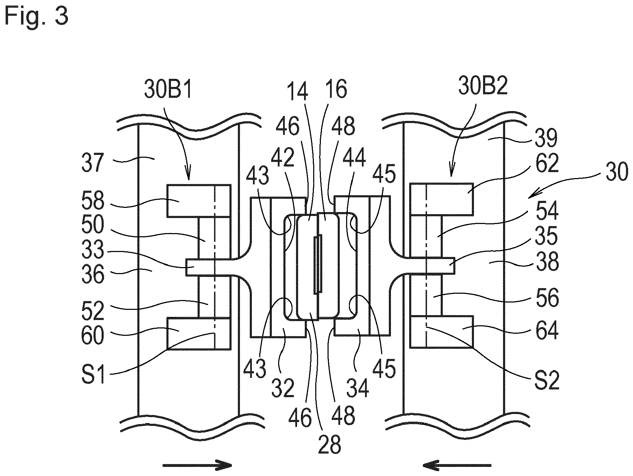

In Fig. 1, for ease of understanding, the electrode column 14 is illustrated at a position significantly shifted in the direction opposite to the X direction (downward in the drawing) with respect to the electrode column 16. In Figs. 2 and 3, the electrode column 16 is at the right position, and the electrode column 14 is at a position slightly shifted in the direction opposite to the X direction (downward in the drawings). Fig. 3 illustrates a state in which the mask plates 32 and 34 have been moved toward the respective abutting positions from the respective open positions in Fig. 2 so that the curved portion on the outer surface of the electrode column 14 abuts on the corner between the recessed portion 42 and the straight portion 46 in the direction (downward in the drawing) opposite to the X direction.

When the mask plates 32 and 34 are further moved toward the respective abutting positions from the positions illustrated in Fig. 3, the recessed portion 42 is moved completely along the outer surface of the electrode column 14 so that the mask plate 32 is gradually displaced in the direction (downward in the drawing) opposite to the X direction.

Fig. 1 illustrates that the mask plates 32 and 34 have reached the respective abutting positions, that is, the straight portions 46 and 48 of the mask plates 32 and 34 abut on each other, the recessed portions 42 and 44 form the through hole 40, and the welded structure portion 28 formed by combining the electrode columns 14 and 16 penetrates the through hole 40. In the displacement allowing mechanisms respectively constituted of the elastic members 50 and 52 and the rigid bodies 58 and 60, the rigid bodies 58 and 60 are fixed in the X direction, the elastic member 50 is expanded therebetween, and the elastic member 52 is accordingly compressed. The mask plate 32 held between the elastic members 50 and 52 is displaced in the direction (downward in the drawing) opposite to the X direction.

Welding is performed in this state. A welding torch is moved along the welding groove 26 of the connection portion 18. At this time, the mask plates 32 and 34 completely mask the outer surfaces of the electrode columns 14 and 16. Thus, even if molten metal leaks to fall down along the outer surfaces of the electrode columns 14 and 16, the presence of the mask plates 32 and 34 prevents such molten metal from reaching the electrode groups 8 located therebelow.

The method of welding the connection portion 18 is not limited. In the embodiment, the connection portion 18 is welded by TIG welding process. That is, a welding rod made of a lead alloy is used to weld the electrode column 14 and the electrode column 16 each made of a lead alloy. Besides, argon may be used as an inert gas, for example; the welding current may be set to 135 A; and a welding torch of a welding robot may be moved over the overall length of the welding groove 26 at an appropriate speed to perform welding.

When the mask plates 32 and 34 are moved toward the respective open positions (away from each other) after the welding is finished, the mask plates 32 and 34 are disengaged from the electrode columns 14 and 16, and the mask plate **32** is displaced in the X direction by the energy storing function and the energy releasing function of the elastic members 50 and 52. In Fig. 2, the mask plates 32 and 34 have been moved away from the electrode columns 14 and 16, and have been automatically returned to the respective origin positions. In the embodiment, the elastic members 50, 52, 54, and 56 are used to allow displacement of the mask plates 32 and 34 and return the mask plates 32 and 34 to the respective origin positions. However, springs may be used in place of the elastic members. In either case, the use of the elastic members 50, 52, 54, and 56 or the springs can simplify the structure of the displacement allowing mechanism.

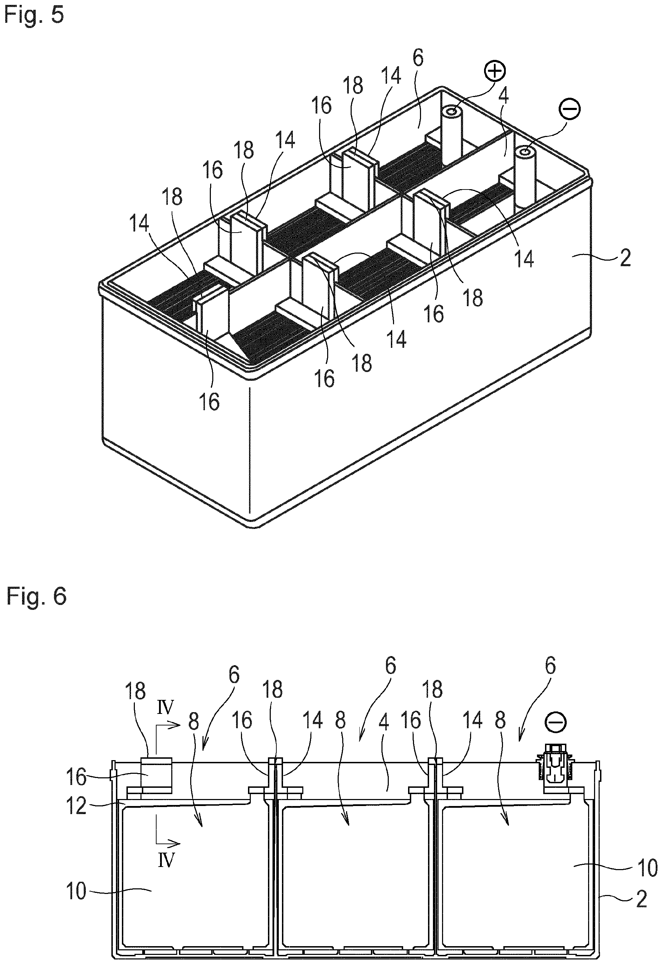

In a situation where a plurality of welded structure portions are provided as illustrated in Figs. 5 and 6, a welding mask apparatus may be prepared for each of the plurality of welded structure portions to weld the plurality of welded structure portions at one time.

### INDUSTRIAL APPLICABILITY

According to the present invention, even if the two electrode columns are assembled, being shifted in the X direction, the two mask plates are displaced in the X direction so that the two electrode columns can be completely fitted in the respective recessed portions formed in the two mask plates . A gap into which molten metal would flow down is not formed between the outer peripheral portion of each of the two electrode columns, which have been assembled with each other, and the two mask plates when the two mask plates abut on each other.

### SIGN LISTING

- 2: Battery case
- 4: Partition wall
- 6: Battery case cell
- 8: Electrode group
- 10: Negative electrode
- 12: Separator
- 14: Electrode column
- 16: Electrode column
- 18: Connection portion
- 26: Welding groove
- 28: Soldered structure
- 30: Welding mask apparatus
- 32, 34: Mask plate
- 36, 38: Mask plate holding mechanism
- 40: Through hole
- 42, 44: Recessed portion
- 46, 48: Straight portion
- 50, 52, 54, 56: Elastic member
- 58, 60, 62, 64: Rigid member

## Claims

1. A welding mask apparatus configured to be used in manufacturing a secondary battery, the secondary battery comprising:
a battery case body (2) including at least two battery case cells (6) partitioned by a partition wall portion (4), at least two electrode groups (8) each having an electrode column (14, 16) and housed respectively in the at least two battery case cells (6), and a connection portion (18) formed by welding two electrode columns (14, 16) of the at least two electrode groups (8) on an outer side of a free end portion of the partition wall portion (4), the two electrode columns (14, 16) of the at least two electrode groups (8) each having an opposing surface wherein the opposing surfaces (15, 17) of the two electrode columns (14, 16) directly oppose each other on the outer side of a free end of the partition wall portion (4) with the two electrode columns (14, 16) being combined with each other before being welded, two opposing surfaces (15, 17) of the two electrode columns (15, 17) being shaped to form a welding groove (26) opened wider in a Z direction wherein the Z direction is defined as a direction from the free end portion of the partition wall portion (4) toward the connection portion (18), an X direction is defined as a direction orthogonal to the Z direction in which the free end portion of the partition wall portion (4) extends, and a Y direction is defined as a direction orthogonal to the Z and X directions;
wherein the welding mask apparatus is configured to prevent molten metal from falling down toward the electrode groups (8) when the welding groove (26) is welded by tungsten inert gas (TIG) welding process, by surrounding an outer periphery of a welded structure portion (28) that is formed by combining the two electrode columns (14, 16) with the two opposing surfaces (15, 17) opposing each other, wherein:
the welding mask apparatus comprises:
two mask plates (32, 34) and a mask holding mechanism (36, 38) operable to hold the two mask plates (32, 34);
the two mask plates (32, 34) are disposed along an imaginary surface extending in the X direction and the Y direction, and shaped to form a through hole (40) to allow the welded structure portion (28) to get thereinto when the two mask plates (32, 34) abut on each other;
the two mask plates (32, 34) each have a recessed portion (42, 44) formed at an abutting end portion thereof to define a part of the through hole (40) when abutting on each other, and a pair of straight portions (46, 48) located at both ends of the recessed portion (42, 44) in the X direction and extending in the X direction; and
the mask holding mechanism (36, 38) includes a moving mechanism (30A1, 30A2) operable to move the two mask plates (32, 34) in the Y direction between an abutting position and an open position, and a displacement allowing mechanism (30B1, 30B2) operable to hold the two mask plates (32, 34) such that the two mask plates (32, 34) are displaceable in the X direction when the two mask plates (32, 34) are positioned in the abutting position.

2. The welding mask apparatus according to claim 1, wherein
the recessed portion (42, 44) formed in each of the two mask plates (32, 34) opens in the Z direction, a direction opposite to the Z direction, and a direction toward the abutting position, and a pair of corner portions (43, 45) of an inner surface of the recessed portion (42, 44), which are respectively continuous with the pair of straight portions (46, 48), are curved or inclined to approach each other toward the open position.

3. The welding mask apparatus according to claim 2, wherein
the displacement allowing mechanism (30B1, 30B2) is configured to hold the mask plates (32, 34) at an origin position when the mask plates (32, 34) are positioned at the open position, to allow intersections between the recessed portion (42, 44) and the straight portions (46, 48) of each mask plate (32, 34) to be displaced in the X direction along an outer surface of the corresponding electrode column (14, 16) when the mask plates (32, 34) are moved from the open position to the abutting position so that the recessed portion (42, 44) of each mask plate (32, 34) is fitted with the corresponding electrode column (14, 16), and to allow the mask plates (32, 34) to be displaced in the X direction and return the mask plates (32, 34) to the origin position when the mask plates (32, 34) are moved from the abutting position to the open position.

4. The welding mask apparatus according to claim 3, wherein
the displacement allowing mechanism (30B1, 30B2) enables the mask plates (32, 34) to be displaced in the X direction by utilizing an energy storing function and an energy releasing function of a spring or an elastic member.

5. The welding mask apparatus according to claim 1, wherein:
the welding mask apparatus is configured such that, when the two electrode columns (14, 16) are combined with each other, one of the two electrode columns (14, 16) is fitted in the recessed portion (42, 44) of one of the two mask plates (32, 34) and one of the pair of straight portions (46, 48) of the one mask plate (32, 34) is in contact with the opposing surface of the other of the two electrode columns (14, 16) being shifted in the X direction.

## Patentansprüche

1. Schweißmaskenvorrichtung, die konfiguriert ist, um bei der Herstellung einer Sekundärbatterie verwendet zu werden, wobei die Sekundärbatterie Folgendes umfasst:
einen Batteriegehäusekörper (2), der zumindest zwei Batteriegehäusezellen (6), die durch einen Trennwandabschnitt (4) getrennt sind, zumindest zwei Elektrodengruppen (8), die je eine Elektrodensäule (14, 16) aufweisen und jeweils in den zumindest zwei Batteriegehäusezellen (6) eingehaust sind, und einen Verbindungsabschnitt (18), der durch Schweißen von zwei Elektrodensäulen (14, 16) der zumindest zwei Elektrodengruppen (8) auf einer Außenseite eines freien Endabschnitts des Trennwandabschnitts (4) gebildet ist, umfasst, wobei die zwei Elektrodensäulen (14, 16) der zumindest zwei Elektrodengruppen (8) jeweils eine gegenüberliegende Fläche aufweisen, wobei die gegenüberliegenden Flächen (15, 17) der zwei Elektrodensäulen (14, 16) einander auf der Außenseite eines freien Endes des Trennwandabschnitts (4) direkt gegenüberliegend sind, wobei die zwei Elektrodensäulen (14, 16) vor dem Schweißen miteinander kombiniert werden, wobei zwei gegenüberliegende Flächen (15, 17) der zwei Elektrodensäulen (15, 17) geformt sind, um eine Schweißfuge (26) zu bilden, die in eine Z-Richtung weiter geöffnet ist, wobei die Z-Richtung als Richtung von dem freien Endabschnitt des Trennwandabschnitts (4) in Richtung des Verbindungsabschnitts (18) definiert ist, eine X-Richtung als eine Richtung definiert ist, die orthogonal auf die Z-Richtung steht, in die sich der freie Endabschnitt des Trennwandabschnitts (4) erstreckt, und eine Y-Richtung als Richtung definiert ist, die orthogonal auf die Z- und X-Richtung steht;
wobei die Schweißmaskenvorrichtung konfiguriert ist, um zu verhindern, dass geschmolzenes Metall in Richtung der Elektrodengruppen (8) nach unten fällt, wenn die Schweißfuge (26) durch einen Wolfram-Inertgas- (TIG) Schweißvorgang geschweißt wird, und zwar durch das Umgeben eines äußeren Umfangs eines Schweißstrukturabschnitts (28), der gebildet wird, indem die zwei Elektrodensäulen (14, 16) mit den zwei gegenüberliegenden Flächen (15,17), die einander gegenüberliegend sind, kombiniert werden, wobei:
die Schweißmaskenvorrichtung Folgendes umfasst:
zwei Maskenplatten (32, 34) und einen Maskenhaltmechanismus (36, 38), der betätigbar ist, um die zwei Maskenplatten (32, 34) zu halten; wobei
die zwei Maskenplatten (32, 34) entlang einer imaginären Fläche angeordnet sind, die sich in die X-Richtung und die Y-Richtung erstreckt, und geformt sind, um ein Durchgangsloch (40) zu bilden, um dem Schweißstrukturabschnitt (28) zu ermöglichen, dort hineinzupassen, wenn die zwei Maskenplatten (32, 34) aneinander anstoßen;
die zwei Maskenplatten (32, 34) jeweils einen ausgesparten Abschnitt (42, 44) aufweisen, der an einem anstoßenden Endabschnitt davon gebildet ist, um einen Teil des Durchgangslochs (40) zu definieren, wenn sie aneinander anstoßen, und ein Paar gerader Abschnitte (46, 48), die an beiden Enden des ausgesparten Abschnitts (42, 44) in die X-Richtung angeordnet sind und sich in die X-Richtung erstrecken; und
der Maskenhaltmechanismus (36, 38) einen Bewegungsmechanismus (30A1, 30A2) umfasst, der betätigbar ist, um die zwei Maskenplatten (32, 34) in der Y-Richtung zwischen einer Anstoßposition und einer offenen Position zu bewegen, und einen Verlagerungsermöglichungsmechanismus (30B1, 30B2), der betätigbar ist, um die zwei Maskenplatten (32, 34) so zu halten, dass die zwei Maskenplatten (32, 34) in X-Richtung verlagerbar sind, wenn die zwei Maskenplatten (32, 34) in der Anstoßposition positioniert sind.

2. Schweißmaskenvorrichtung nach Anspruch 1, wobei
der ausgesparte Abschnitt (42, 44), der in jeder der zwei Maskenplatten (32, 34) gebildet ist, sich in Z-Richtung, eine Richtung gegenüberliegend zur Z-Richtung, und eine Richtung in Richtung der Anstoßposition öffnet, und ein Paar Eckabschnitte (43, 45) einer Innenfläche des ausgesparten Abschnitts (42, 44), die jeweils mit dem Paar an geraden Abschnitten (46, 48) zusammenhängend sind, gekrümmt oder geneigt sind, um einander in Richtung der offenen Position anzunähern.

3. Schweißmaskenvorrichtung nach Anspruch 2, wobei
der Verlagerungsermöglichungsmechanismus (30B1, 30B2) konfiguriert ist, um die Maskenplatten (32, 34) an einer Ursprungsposition zu halten, wenn die Maskenplatten (32, 34) in der offenen Position positioniert sind, um zu ermöglichen, dass Schnittpunkte zwischen dem ausgesparten Abschnitt (42, 44) und den geraden Abschnitten (46, 48) jeder Maskenplatte (32, 34) in X-Richtung entlang einer Außenfläche der entsprechenden Elektrodensäule (14, 16) verlagert werden, wenn die Maskenplatten (32, 34) von der offenen Position zu der Anstoßposition bewegt werden, sodass der ausgesparte Abschnitt (42, 44) jeder Maskenplatte (32, 34) mit der entsprechenden Elektrodensäule (14, 16) eingepasst ist, und um zu ermöglichen, dass die Maskenplatten (32, 34) in X-Richtung verlagert werden und die Maskenplatten (32, 34) auf die Ursprungsposition zurückgestellt werden, wenn die Maskenplatten (32, 34) von der Anstoßposition in die offene Position bewegt werden.

4. Schweißmaskenvorrichtung nach Anspruch 3, wobei
der Verlagerungsermöglichungsmechanismus (30B1, 30B2) es den Maskenplatten (32, 34) ermöglicht, in X-Richtung verlagert zu werden, indem eine Energiespeicherfunktion und eine Energiefreisetzungsfunktion einer Feder oder eines elastischen Elements verwendet werden.

5. Schweißmaskenvorrichtung nach Anspruch 1, wobei
die Schweißmaskenvorrichtung so konfiguriert ist, dass, wenn die zwei Elektrodensäulen (14, 16) miteinander kombiniert werden, eine der zwei Elektrodensäulen (14, 16) in den ausgesparten Abschnitt (42, 44) von einer der zwei Maskenplatten (32, 34) eingepasst ist und einer des Paars an geraden Abschnitten (46, 48) der einen Maskenplatte (32, 34) in Kontakt ist mit der gegenüberliegenden Fläche der anderen der zwei Elektrodensäulen (14, 16), die in X-Richtung verlagert wird.

## Revendications

1. Dispositif de masque de soudage configuré pour être utilisé dans la fabrication d'une batterie secondaire, la batterie secondaire comprenant :
un corps de boîtier de batterie (2) comprenant au moins deux éléments de boîtier de batterie (6) séparées par une partie de paroi de séparation (4), au moins deux groupes d'électrodes (8) ayant chacun une colonne d'électrodes (14, 16) et logés respectivement dans les au moins deux cellules de boîtier de batterie (6), et une partie de connexion (18) formée en soudant deux colonnes d'électrodes (14, 16) des au moins deux groupes d'électrodes (8) sur un côté extérieur d'une partie d'extrémité libre de la partie de paroi de séparation (4), les deux colonnes d'électrodes (14, 16) des au moins deux groupes d'électrodes (8) ayant chacune une surface opposée, dans lequel les surfaces opposées (15, 17) des deux colonnes d'électrodes (14, 16) s'opposent directement l'une à l'autre sur le côté extérieur d'une extrémité libre de la partie de paroi de séparation (4), les deux colonnes d'électrodes (14, 16) étant combinées l'une à l'autre avant d'être soudées, deux surfaces opposées (15, 17) des deux colonnes d'électrodes (15, 17) étant formées pour former une gorge de soudage (26) ouverte plus largement dans une direction Z, dans lequel la direction Z est définie comme une direction allant de la partie d'extrémité libre de la partie de paroi de séparation (4) vers la partie de connexion (18), une direction X est définie comme une direction orthogonale à la direction Z dans laquelle s'étend la partie d'extrémité libre de la partie de paroi de séparation (4), et une direction Y est définie comme une direction orthogonale aux directions Z et X ;
dans lequel le masque de soudage est configuré pour empêcher du métal en fusion de tomber vers les groupes d'électrodes (8) lorsque la gorge de soudage (26) est soudée par un procédé de soudage au gaz inerte de tungstène (TIG) en entourant une périphérie extérieure d'une partie de structure soudée (28) qui est formée en combinant les deux colonnes d'électrodes (14, 16) avec les deux surfaces opposées (15, 17) s'opposant l'une à l'autre, dans lequel :
le dispositif masque de soudage comprend :
deux plaques de masque (32, 34) et un mécanisme de maintien de masque (36, 38) opérationnel pour maintenir les deux plaques de masque (32, 34) ;
les deux plaques de masque (32, 34) sont disposées le long d'une surface imaginaire s'étendant dans la direction X et la direction Y, et mises en forme pour former un trou traversant (40) afin de permettre à la partie de structure soudée (28) d'y passer lorsque les deux les plaques de masque (32, 34) sont mises en butées l'une contre l'autre ;
les deux plaques de masque (32, 34) ont chacune une partie évidée (42, 44) formée dans une partie d'extrémité venant en butée de celles-ci pour définir une partie du trou traversant (40) lorsqu'elles viennent en butée l'une contre l'autre, et une paire de parties droites (46, 48) situées aux deux extrémités de la partie évidée (42, 44) dans la direction X et s'étendant dans la direction X ; et
le mécanisme de maintien de masque (36, 38) comprend un mécanisme de déplacement (30A1, 30A2) opérationnel pour déplacer les deux plaques de masque (32, 34) dans la direction Y entre une position de mise en butée et une position ouverte, et un mécanisme d'autorisation de déplacement (30B1, 30B2) opérationnel pour maintenir les deux plaques de masque (32, 34) de telle sorte que les deux plaques de masque (32, 34) peuvent être déplacées dans la direction X lorsque les deux plaques de masque (32, 34) sont positionnées dans la position de mise en butée.

2. Dispositif masque de soudage selon la revendication 1, dans lequel
la partie évidée (42, 44) formée dans chacune des deux plaques de masque (32, 34) s'ouvre dans la direction Z, dans une direction opposée à la direction Z et dans une direction vers la position de mise en butée, et une paire de parties de coin (43, 45) d'une surface intérieure de la partie évidée (42, 44), qui sont respectivement continues avec la paire de parties droites (46, 48), sont incurvées ou inclinées pour se rapprocher vers la position ouverte.

3. Dispositif masque de soudage selon la revendication 2, dans lequel
le mécanisme d'autorisation de déplacement (30B1, 30B2) est configuré pour maintenir les plaques de masque (32, 34) dans une position d'origine lorsque les plaques de masque (32, 34) sont positionnées dans la position ouverte, pour permettre à des intersections entre la partie évidée (42, 44) et les parties droites (46, 48) de chaque plaque de masque (32, 34) d'être déplacées dans la direction X le long d'une surface extérieure de la colonne d'électrodes (14, 16) correspondante lorsque les plaques de masque (32, 34) sont déplacés de la position ouverte à la position de mise en butée de sorte que la partie évidée (42, 44) de chaque plaque de masque (32, 34) est équipée de la colonne d'électrodes correspondante (14, 16), et pour permettre aux plaques de masque (32, 34) d'être déplacées dans la direction X et de ramener les plaques de masque (32, 34) à la position d'origine lorsque les plaques de masque (32, 34) sont déplacées de la position de mise en butée à la position ouverte.

4. Dispositif masque de soudage selon la revendication 3, dans lequel le mécanisme d'autorisation de déplacement (30B1, 30B2) permet aux plaques de masque (32, 34) d'être déplacées dans la direction X en utilisant une fonction de stockage d'énergie et une fonction de libération d'énergie d'un ressort ou un membre élastique.

5. Dispositif masque de soudage selon la revendication 1, dans lequel :
le dispositif masque de soudage est configuré de telle sorte que, lorsque les deux colonnes d'électrodes (14, 16) sont combinées l'une avec l'autre, une première des deux colonnes d'électrodes (14, 16) est ajustée dans la partie évidée (42, 44) d'une première des deux plaques de masque (32, 34) et l'une de la paire de parties rectilignes (46, 48) de la première plaque de masque (32, 34) est en contact avec la surface opposée de l'autre des deux colonnes d'électrodes (14, 16) étant décalée dans la direction X.
